# EUROPÄISCHE PATENTSCHRIFT

(11) **EP 1 543 685 B1**
(45) Veröffentlichungstag und Bekanntmachung des Hinweises auf die Patenterteilung: **14.07.2010**
(21) Anmeldenummer: 03747989.6
(22) Anmeldetag: 09.09.2003
(51) Int. Cl.: H04Q 1/14

(54) **ANORDNUNG ZUR ÜBERWACHUNG VON PATCHFELDERN AN VERTEILERPUNKTEN IN DATENNETZWERKEN**
ARRANGEMENT FOR MONITORING PATCH PANELS AT DISTRIBUTOR POINTS IN DATA NETWORKS
DISPOSITIF PERMETTANT DE SURVEILLER DES CHAMPS DE CONNEXION SUR DES POINTS DE REPARTITION DANS DES RESEAUX DE DONNEES

(30) Priorität: 23.09.2002 DE 10244304
(43) Veröffentlichungstag der Anmeldung: 22.06.2005
(73) Patentinhaber: S-BG Teleport Technologieverwaltungs GmbH, 39179 Barleben (DE)
(72) Erfinder: HORN, Thomas, 38895 Langenstein (DE)
(74) Vertreter: Einsel, Martin
(86) Internationale Anmeldenummer: PCT/EP2003/009986
(87) Internationale Veröffentlichungsnummer: WO 2004/030154

(56) Entgegenhaltungen:
- EP-A- 0 719 058
- DE-A- 19 841 738
- GB-A- 2 347 507
- US-A- 4 138 599
- US-A- 5 432 505
- US-A- 5 910 776
- US-B1- 6 285 293

## Beschreibung

Die Erfindung betrifft eine Anordnung zur Überwachung von Patchfeldern an Verteilerpunkten in Datennetzwerken, mit Patchkabeln, die mittels Steckern in Anschlüsse in den Patchfeldern einsteckbar sind.

Datennetzwerke dienen unter anderem dazu, eine größere Zahl an Arbeitsplätzen beziehungsweise die dort sitzenden Mitarbeiter, also die Nutzer des Datennetzwerkes mit Datenanschlüssen zu versehen. Die Nutzer an den Arbeitsplätzen werden so mit einzelnen Diensten versorgt, beispielsweise mit Datendiensten oder auch Telekommunikationsdiensten. Um dies vorzunehmen, weisen die Datennetzwerke zentrale Verteilerpunkte, meistens Verteilerschränke auf. In den Verteilerpunkten sind Patchfelder vorgesehen. Diese Patchfelder besitzen Ports, also Anschlüsse. Von den Ports dieser Patchfelder führen Datenkabel sternförmig den Datenanschlüssen an den Arbeitsplätzen.

In den Verteilerschränken oder Verteilerpunkten befinden sich neben den Patchfeldern auch die aktiven Geräte. Diese aktiven Geräte dienen der Verteilung der Daten, der Telefonsignale oder auch sonstiger Anwendungen.

Die Verbindung von den aktiven Geräten zu den Patchfeldern (häufig auch Patchpanels genannt) wird mit Patchkabeln realisiert. Diese Patchkabel besitzen an jedem Ende einen Stecker. Dieser Stecker ist in einen Port oder Anschluss an einem Patchfeld einsteckbar. Die Patchkabel sind im Regelfall 8-adrig, flexibel und etwa 0,5 m bis 5 m lang. Bei Kupferkabeln sind die Stecker im Allgemeinen sogenannte RJ45-Stecker, Glasfasern wurden mit verschiedenen Steckern konfektioniert.

Um nun einen Arbeitsplatz mit den gewünschten Diensten zu versorgen, beziehungsweise ihm diese Dienste zur Verfügung zu stellen, muss nun entsprechend das aktive Gerät mit dem entsprechenden Port am Patchfeld oder Patchpanel verbunden werden. Benötigt zum Beispiel ein Nutzer einen Telefonanschluss sowie einen Datenanschluss, so werden ihm durch das Verbinden der entsprechenden Ports mit dem aktiven Gerät die Telefonanlage und ein Datenswitch zur Benutzung zur Verfügung gestellt.

Bei Veränderungen der Dienste, bei Umzügen, Versetzungen oder auch sonstigen Reorganisationsmaßnahmen kann es erforderlich werden, Veränderungen dieser Verbindungen an den Verteilern vorzunehmen. In diesem Fall muss "umgepatcht" werden. Es müssen also Patchkabel den nunmehr benötigten Diensten entsprechend umgesteckt werden.

Dadurch entstehen eine Reihe von Problemen. Eine Vielzahl an Patchkabeln verdeckt die einzelnen Patchfelder und sie verflechten sich auch miteinander. Nicht mehr benötigte Verbindungen bleiben teilweise noch gepatcht. Die Übersichtlichkeit bei mittleren und großen Installationen nimmt so zwangsläufig teilweise drastisch ab. Die Folge dieser Probleme sind Fehler und Zeitverluste bei der Ausführung der Umpatchungen. Dies wiederum führt zu einem erhöhten Arbeitszeitaufwand des zuständigen Administrators sowie auch bei den Nutzern, bis durch Nacharbeiten die Dienste auch wirklich zur Verfügung stehen. Nicht auszuschließen sind auch Beschädigungen der Geräte oder auch eine gänzlich unbeabsichtigte Außerbetriebnahme von Diensten durch falsches Patchen.

Bei Unternehmen mit verteilten Niederlassungen wird es darüber hinaus auch wünschenswert, eine Femüberwachung (Remoteüberwachung) und/oder-steuerung zu haben. Dabei sollen dann zentral von einem Administrator aus die Außenstellen überwacht und gegebenenfalls gesteuert werden.

Hierfür gibt es auch bereits auf dem Markt eine entsprechende Lösung. Diese bekannte Lösung speichert alle Daten, wie die Namen der Ports, der Nutzer etc. zu den einzelnen Verbindungen in einer SQL-Datenbank (structured query language, strukturierte Abfragesprache). Diese Datenbank speichert ihre Daten auf einem bestimmten Computer, der als Management-Konsole bezeichnet wird.

Um dies vornehmen zu können, werden in den Ports der Patchfelder weitere Kontakte vorgesehen. Außerdem wird in den Patchkabeln ein zusätzlicher Draht beziehungsweise eine zusätzliche Verbindungsader beziehungsweise ein Leiter vorgesehen, um eine Verbindung herzustellen, die von einem sogenannten Scanner erkannt werden kann. Diese Scanner sind elektronische Geräte. Sie prüfen über den Leiter eine Verbindung von Port zu Port. Sie geben diese Information an ein entsprechendes Managementsystem. Das Managementsystem ist in der Regel auf dem PC implementiert, der auch die Datenbank aufweist.

Nachrüstungen bestehender Installationen erweisen sich hierbei als schwierig, da spezielle Nachrüstsätze für die bereits vorhandenen Patchfelder angefertigt werden müssen. Außerdem gibt es Beschränkungen, da Patchkabel bei diesem System immer von einem Patchfeld zu einem anderen Patchfeld geführt werden müssen, um die entsprechenden Ablesungen durch die Scanner realisieren zu können. Ferner muss jeweils ein Patchfeld mit den aktiven Geräten geschaltet werden, was eine feste Verdrahtung durch das Auflegen auf der Rück- oder Klemmseite der Patchpanels erfordert. Patchungen direkt von den aktiven Geräten auf ein Patchfeld können nicht korrekt erkannt werden.

Auch ein nur einseitig in ein Patchfeld eingestecktes Patchkabel, bei dem das zweite Ende offen ist und demzufolge keine Verbindung herstellt, kann nicht erkannt werden.

Ferner können Glasfaserpatchkabel nicht verwandt werden. Sie müssen gegebenenfalls mit einem Beilaufdraht der obengenannten Verbindungsader versehen werden, um von den Scannern abgelesen werden zu können. Dadurch sind sie nicht mehr kupferfrei und entsprechen damit nicht mehr den Anforderungen an kupferfreie Glasfaserverkabelungen.

Auch Querverbindungen zwischen den Verteilerschränken sind nicht zugelassen, damit auch keine zweiten Patchungen, die gelegentlich gewünscht werden. Auch diese könnten nicht erkannt werden. Schließlich führt das erforderliche Abfragen der von den Patchkabeln gebildeten Stromschleifen und die Verständigung der Scanner untereinander zu sehr erheblichen Systemlaufzeiten. Nimmt man beispielsweise Datennetzwerke mit einer Größenordnung von etwa hunderttausend Anschlüssen, die durchaus bei größeren Unternehmen realistisch sind, so können diese Abfragezeiten durchaus auch bei 24 Stunden und mehr liegen. Schließlich müssen bei Nachrüstungen die bereits vorhandenen Patchkabel vollständig durch neue auf dieses System spezialisierte Patchkabel ersetzt werden.

Eine Anordnung etwa nach dieser Grundkonzeption wird beispielsweise in der EP 0 575 100 B1 vorgeschlagen.

Ähnlich sind auch Systeme zum Nachverfolgen von eingesteckten Patchkabeln in einem Telekommunikations-Verteilersystem aufgebaut, die in der GB 2 347 507 A vorgeschlagen werden. Passive Sensoren werden an den Patch Panels der Verteilersysteme installiert und erkennen, ob ein Stecker eingesteckt ist oder nicht. Mühsames manuelles Überprüfen soll so unnötig werden.

Auch diese Anordnungen lassen noch Wünsche offen.

Aufgabe der Erfindung ist es daher, eine einfachere Anordnung zur Überwachung von Patchfeldern an Verteilerpunkten in Datennetzwerken zu schaffen, die vor allem weniger aufwendig ist.

Diese Aufgabe wird gelöst durch eine Anordnung zur Überwachung von Patchfeldern an Verteilerpunkten in Datennetzwerken, mit Patchkabeln, die mittels Steckern in Anschlüsse in den Patchfeldern einsteckbar sind, wobei beide Stecker je Patchkabel mit je einem Transponder ausgerüstet sind, mit Readern mit Readerspulen, wobei jeder Anschluss in einem Patchfeld mit einer Readerspule oder mit einem Reader ausgerüstet ist, und wobei die Reader in Datenverbindung mit einer Auswertungseinheit stehen.

Dadurch werden praktisch alle geschilderten Nachteile überraschend beseitigt. Jeder Stecker wird erkannt, auch ein nur einseitig eingestecktes Kabel. Verbindungen können direkt von den aktiven Geräten zu den Patchfeldern ausgeführt werden und werden gleichwohl erkannt.

Mit der Erfindung wird darüber hinaus erstmals die Möglichkeit geschaffen, eine Identifizierung einer Kabelverbindung zwischen zwei baugleichen Ports zu erlauben. Auch nach der EP 0 575 100 B1 können Ports ein Signal entweder nur senden oder nur empfangen und der dort vorgesehene einzelne Stecker eines Kabels mit einem Mittel zur Identifikation kann die ebenfalls nicht leisten.

Von Vorteil ist es, wenn auch die aktiven Geräte , die mit den Patchfeldern verbindbar sind, Anschlüsse aufweisen, die mit einer Readerspule oder mit einem Reader ausgerüstet sind.

Ein Reader ist eine für sich bekannte elektronische Schaltung, die eine Spule in Form einer Lesespule aufweist. Diese Spule besitzt eine bestimmte Induktivität. Die elektronische Schaltung des Readers ist in der Lage, Schwankungen des Magnetfeldes seiner Spule zu erkennen und auszuwerten.

Ein Reader kann mehrere Spulen aufweisen. Dies wird aus Kostengründen auch bevorzugt der Fall sein. Der Reader kann dann eine Auswertung der Schwankungen der Magnetfelder seiner unterschiedlichen Spulen erkennen, indem er analog von Spule zu Spule umschaltet.

Es ist also möglich, für jeden Anschluss beziehungsweise für.jeden Port einen Reader einzusetzen, der dann jeweils nur eine Readerspule aufweist. Bevorzugt aber wird jeder Anschluss zwar mit einer Readerspule versehen, diese Readerspulen sind aber kombiniert und gehören zu einem gemeinsamen Reader, der dann mehrere Spulen, gegebenenfalls sogar das gesamte Patchfeld mit seinen Anschlüssen versorgt.

Ein Transponder weist ebenfalls eine elektrische Schaltung und eine Spule auf. Transponder sind für sich beziehungsweise in Zusammenhang mit anderen Steckertypen und Anwendungsfällen beispielsweise aus der DE 198 41 738 A1 und der US-PS 5,910,776 bekannt und in der Regel sehr klein. Die Schaltung besteht nur aus einem Chip und enthält keine eigene Stromversorgung. Der in der US-PS 5,910,776 beschriebene Transponder ist ein Radio Frequency Identification Transponder (RFID) und an oder in einem Stecker angebracht, beispielsweise für eine Stromversorgung. Ein RFID Leser an einem Anschluss kann dann diesen Transponder auslesen, wenn er eingesteckt wird. Dadurch kann der Stecker identifiziert werden.

Der Transponder mit seiner Transponderspule und elektronischen Schaltung wird ja gemeinsam mit dem Stecker in den Anschluss gesteckt. Dadurch greift das Magnetfeld des Readers beziehungsweise der Readerspule in das Magnetfeld der Spule des Transponders ein beziehungsweise baut dieses überhaupt erst auf und sorgt so gleichzeitig für den nun entstehenden Versorgungsstrom für die Schaltung des Transponders. Es tritt also eine Wechselwirkung ein.

Aufgrund der geringen Abmessungen von nur wenigen Millimetern lässt sich der Transponder mit seinen Bestandteilen problemlos in einem Patchkabel beziehungsweise in einem Stecker eines Patchkabels integrieren oder dort anbringen.

Es befindet sich dann an jedem Ende eines Patchkabels benachbart zum Stecker ein Transponder.

Befindet sich der Transponder mit seiner Transponderspule im Magnetfeld eines Readers beziehungsweise einer Readerspule, so sendet er kontinuierlich eine Kennung. Diese Kennung wird von dem Reader erkannt und ausgewertet. Er gibt diese Daten dann zur Auswertungseinheit, also zu einer Management-Konsole.

Auch die Management-Konsole hat damit die Information, dass sich ein bestimmtes Patchkabel in einem bestimmten Anschluss eines bestimmten Patchfeldes befindet. Es kann diese Information als korrekt oder falsch auswerten und den Nutzer oder Administrator entsprechend informieren.

Die Steuerung der Schaltungen der Reader kann von Mikrokontrollern organisiert werden. Ein Mikrokontroller würde in diesem Fall den gesamten Ablauf der Umschaltung der Spulen, der Steuerung der Reader, das Auslesen der Daten des Readers sowie die Weiterleitung dieser Daten zur Auswertungseinheit beziehungsweise zur Management-Konsole über das Datennetz steuern.

Es entsteht insgesamt also ein sehr zuverlässiges und trotzdem sehr einfaches Verfahren zum Erkennen der Patchkabel am jeweiligen Anschluss eines Patchfeldes.

Die Auswertungseinheit beziehungsweise die Datenbank kann eine Reihe von Informationen halten. Dazu gehört die Portbelegung aller Patchpanels, entsprechend der Fragestellung "Ist ein Patchkabel in einem Anschluss eingesteckt - ja oder nein?". Es kann auch die Information enthalten sein, welcher Dienst zur Verfügung gestellt wird, also ob es sich um einen Telefonanschluss, einen Datenanschluss oder einen anderen Anschluss handelt.

Die Datenbank kann auch aus anderer Quelle Informationen erhalten, über Änderungen, die ausgeführt werden müssen, beispielsweise aufgrund einer Umnutzung eines Arbeitsplatzes. In diesem Falle gibt der Administrator am PC der Auswertungseinheit vor, welche Patchkabel umzustecken sind, um diese Änderungen vorzunehmen. An den Patchfeldern sind bevorzugt an jedem Port beziehungsweise Anschluss eine optische Anzeige angeordnet, insbesondere eine Licht emittierende Diode (LED). Ein erforderliches Umstecken kann dann durch eine leuchtende optische Anzeige gekennzeichnet werden, so dass auf einfachste Weise erkannt wird, welcher von sehr vielen, zahlreichen Anschlüssen gerade aktuell gemeint ist. Im Fehlerfall, also bei einem falsch gesteckten Kabel, kann die optische Anzeige beispielsweise blinken.

Diese und andere Fehler können in der Datenbank fortgeschrieben werden und als Protokoll dienen, um etwa nachträgliche Funktionsausfälle prüfen zu können.

Glasfaserkabel können so wie sie sind, verwendet werden, also als reine Glasfaserkabel ohne ein Beilaufkabel aus Kupfer.

Das System ist in seiner Verarbeitungszeit enorm schnell. Querverbindungen zwischen den Verteilerschränken sind erlaubt und werden auch erkannt.

Die benötigten Komponenten sind alle sehr kostengünstig, sowohl die Reader, die Transponder als auch die Microcontroler, und erhöhen die Fertigungskosten nur geringfügig. Scanner werden nicht mehr benötigt.

Das System ist auch nachrüstbar. Durch eine Blende können die Spulen für die Reader an den Ports angebracht werden. Die Spulen sind verschiebbar, die Blenden sind für verschiedenen Patchfelder oder Patchpanel einsetzbar. Dadurch werden nur wenige Blenden entsprechend den eingesetzten Portzahlen fertigzuscannen sein.

Im Folgenden wird ein Ausführungsbeispiel der Erfindung im Einzelnen beschrieben.

Es zeigt:

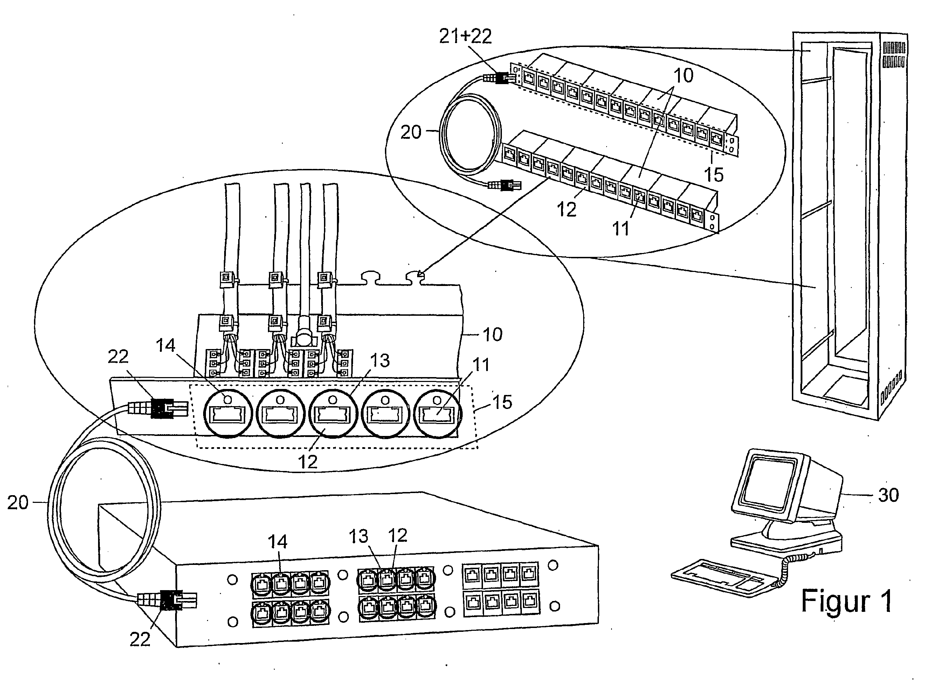

**Figur 1** eine schematische Darstellung einer erfindungsgemäßen Anordnung.

In der **Figur 1** ist ein bevorzugtes Ausführungsbeispiel einer derartigen erfindungsgemäßen Anordnung schematisch dargestellt. Zu erkennen ist ein Patchfeld 10 mit einer Vielzahl von Anschlüssen 11, den sogenannten Ports. Diese Anschlüsse ermöglichen das Einstecken von Patchkabeln 20. beziehungsweise von Steckern 21, die sich am Ende eines Patchkabels 20 befinden.

Das Patchfeld 10 ist mit einem oder mehreren Readern 12 ausgerüstet. Jeder Reader 12 weist ein oder mehrere Readerspulen 13 auf. Jeder Anschluss 11 ist mit einer Readerspule 13 ausgerüstet.

Darüber hinaus besitzt jeder Anschluss 11 auch noch eine optische Anzeige 14, beispielsweise in Form einer Licht imitierenden Diode.

Die Patchkabel 20 dienen dazu, die Patchfelder miteinander beziehungsweise mit bestimmten Dienstleistungsgeräten, etwa Telefonanschlüssen, zu versorgen. Ein Patchkabel 20 hat mithin zwei Enden, die jeweils mit einem Stecker 21 ausgerüstet sind. In dem Stecker 21 oder bei nachträglicher Ausrüstung an dem Stecker 21 des Patchkabels 20 befindet sich ein Transponder 22. Der Transponder 22 besitzt eine Spule sowie eine elektronische Schaltung, ist aber insgesamt sehr klein gehalten und findet an oder im Stecker 21 problemlos Platz. Bei originärer Herstellung würde der Transponder 22 von vornherein mit dem Stecker 21 beziehungsweise im Kunststoff um den Stecker 21 eingespritzt werden, bei Nachrüstung ist aber auch ein problemloses Anbringen außen möglich.

Nach dem Einstecken des Steckers 21 in den Anschluss 11 eines Patchfeldes 10 befindet sich mithin der Transponder 22 mit seiner Spule in unmittelbarer Nähe einer Readerspule 13, so dass die Magnetfelder der beiden Spulen einander beeinflussen beziehungsweise sich aufbauen. Die Veränderung des Magnetfeldes der Readerspule 13 durch die Spule des Transponders 22 kann vom Reader ausgewertet und entsprechend weitergegeben werden.

Diese Weitergabe erfolgt an eine Auswertungseinheit 30, gegebenenfalls unter Zwischenschaltung eines Mikrokontrollers.

Die Auswertungseinheit 30 kann an einem anderen, gegebenenfalls auch weit entfernten Ort stehen, um eine Remote- oder Fernüberwachung zu ermöglichen.

Zur nachträglichen Ausrüstung bereits vorhandener Patchfelder 10 ist es vorteilhaft, wenn eine Blende 15 vorgesehen ist, die die Reader 12 und Readerspulen 13 trägt. Diese Blende 15 kann dann einfach vor die Patchfelder 10 mit ihren Anschlüssen 11 vorgesetzt werden, so das automatisch die Reader 12 und die Readerspulen 13 in die Nähe der Anschlüsse 11 positioniert werden.

### Bezugszeichenliste

- 10: Patchfeld
- 11: Anschluss oder Port
- 12: Reader am Port
- 13: Readerspule
- 14: optische Anzeige
- 15: Blende

- 20: Patchkabel
- 21: Stecker des Patchkabels
- 22: Transponder im Stecker

- 30: Auswertungseinheit

## Patentansprüche

1. Anordnung zur Überwachung von Patchfeldern (10) an Verteilerpunkten in Datennetzwerken,
mit Patchkabeln (20), die mittels Steckern (21) in Anschlüsse (11) in den Patchfeldern (10) einsteckbar sind,
wobei beide Stecker (21) je Patchkabel mit je einem Transponder (22) ausgerüstet sind,
mit Readern (12) mit Readerspulen (13),
wobei jeder Anschluss (11) in einem Patchfeld mit einer Readerspule oder mit einem Reader ausgerüstet ist, und
wobei die Reader (12) in Datenverbindung mit einer Auswertungseinheit (30) stehen.

2. Anordnung nach Anspruch 1,
**dadurch gekennzeichnet,**
**dass** auch aktive Geräte, die mit den Patchfeldern (10) verbindbar sind, Anschlüsse (11) aufweisen, die mit einer Readerspule (12) oder mit einem Reader (13) ausgerüstet sind.

3. Anordnung nach Anspruch 1 oder 2,
**dadurch gekennzeichnet,**
**dass** jeder Anschluss (11) mit einer optischen Anzeige versehen ist, vorzugsweise mit einer Licht emittierenden Diode (LED).

4. Anordnung nach einem der vorstehenden Ansprüche,
**dadurch gekennzeichnet,**
**dass** eine Blende (15) vorgesehen ist, in der die Reader (12) mit ihren Readerspulen (13) angeordnet sind und die vor ein Patchfeld (10) vorsetzbar ist.

## Claims

1. Arrangement for monitoring patch panels (10) at distributor points in data networks, with patch cables (20), which can be inserted into connections (11) in the patch panels (10) by means of plugs (21), wherein both plugs (21) of each patch cable are each fitted with a respective transponder (22), with readers (12) with reader coils (13), wherein each connection (11) in a patch panel is fitted with a reader coil or with a reader, and
wherein a data link exists between the readers (12) and an evaluation unit (30).

2. Arrangement according to Claim 1, **characterised in that** active devices, which can be connected to the patch panels (10), also have connections (11), which are fitted with a reader coil (12) or with a reader (13).

3. Arrangement according to Claim 1 or 2, **characterised in that** each connection (11) is provided with an optical display, preferably with a light-emitting diode (LED).

4. Arrangement according to one of the preceding claims, **characterised in that** a cover (15) is provided, in which the readers (12) are arranged with their reader coils (13) and which can be positioned in front of a patch panel (10).

## Revendications

1. Dispositif permettant de surveiller des panneaux de raccordement (10) au niveau de points de répartition dans des réseaux de données,
avec des cordons de raccordement (20) pouvant s'insérer par des fiches (21) dans des ports (11) dans les panneaux de raccordement (10),
dans lequel les deux fiches (21) par cordon de raccordement sont équipées respectivement d'un transpondeur (22),
avec des lecteurs (12) et des bobines de lecteur (13),
dans lequel chaque port (11) dans un tableau de raccordement est équipé d'une bobine de lecteur ou d'un lecteur, et
dans lequel les lecteurs (12) sont en communication de données avec une unité d'évaluation (30).

2. Dispositif selon la revendication 1, **caractérisé en ce**
**que** des appareils actifs pouvant être reliés aux panneaux de raccordement (10) présentent également des ports (11) munis d'une bobine de lecteur (12) ou d'un lecteur (13).

3. Dispositif selon les revendications 1 ou 2,
**caractérisé en ce**
**que** chaque port (11) est muni d'un affichage visuel, de préférence d'une diode électroluminescente (LED).

4. Dispositif selon l'une quelconque des revendications précédentes,
**caractérisé en ce**
**qu'**un cache (15) est prévu dans lequel sont disposés les lecteurs (12) avec leurs bobines de lecteur (13) et qui peut être placé devant un panneau de raccordement (10).
